Europäisches Patentamt

European Patent Office

Office européen des brevets

(19)

(11) Veröffentlichungsnummer: **0 108 943**
**A1**

(12) # EUROPÄISCHE PATENTANMELDUNG

(21) Anmeldenummer: 83110289.2

(51) Int. Cl.³: **C 08 L 77/02, A 42 B 3/02**

(22) Anmeldetag: **15.10.83**

(30) Priorität: **20.10.82 DE 3238799**

(43) Veröffentlichungstag der Anmeldung: **23.05.84**
**Patentblatt 84/21**

(84) Benannte Vertragsstaaten: **AT BE CH DE FR GB IT LI LU NL SE**

(71) Anmelder: **HARWE AG, Bäckerstrasse 5, CH-5012 Schönenwerd (CH)**

(72) Erfinder: **Hartmann, Werner, Fischerstrasse 34, D-7750 Konstanz (DE)**

(74) Vertreter: **Riebling, Günter Dr.-Ing., Dipl.-Ing., Ing.grad. et al, Rennerle 10 Postfach 3160, D-8990 Lindau (DE)**

(54) Verfahren zur Herstellung von Formkörpern aus Polylaurinlactam, sowie die danach erhaltenen Formkörper.

(57) Ein Polylaurinlactam-Formkörper wird dadurch hergestellt, daß eine Laurinlactamschmelze zunächst mit einem Katalysator vermischt und anschließend das Gemisch mit einem Aktivator versetzt und polymerisiert wird, indem das polymerisierende Material zu Fäden oder Strängen vergossen und anschließend zu Granulaten zerkleinert wird und das zerkleinerte Material bei Temperaturen von 220 bis 255 °C und Drücken von $50 \cdot 10^5$ bis $100 \cdot 10^5$ Pa spritzgußgeformt wird, wobei gemäß der Erfindung dem Granulat vor der Formung 0,1 bis 5 Gew.-% Siliconfett zugesetzt werden. Die danach erhaltenen Formkörper, insbesondere Schutzhelme und Schutzplatten, zeichnen sich durch überlegene physikalische Eigenschaften aus.

EP 0 108 943 A1

Verfahren zur Herstellung von Formkörpern aus Polylaurinlactam, sowie die danach erhaltenen Formkörper

----------------------------------------

Die Erfindung betrifft ein Verfahren zur Herstellung von Formkörpern aus Polylaurinlactam sowie die danach erhaltenen Formkörper, insbesondere in Form von Schutzhelmen und Schutzplatten.

Nach einem älteren Vorschlag gemäss der deutschen Patentanmeldung P 31 14 217.6 werden Formkörper aus Polylaurinlactam nach einem Verfahren hergestellt, bei dem Laurinlactam geschmolzen wird, die Schmelze zunächst mit einem Katalysator vermischt und anschließend das Gemisch mit einem Aktivator versetzt und polymerisiert wird, wobei das polymerisierende Material zu Fäden oder Strängen vergossen wird und anschließend zu Granulaten zerkleinert wird und das zerkleinerte Material bei Temperaturen von 220 bis 255° C und Drücken von $50 \cdot 10^5$ bis $100 \cdot 10^5$ Pa spritzgußgeformt wird. Die nach diesem Verfahren erhältlichen Polylaurinlactam-Formkörper besitzen gute chemische und physikalische Eigenschaften. Bei außerordentlicher Belastung derartiger Formkörper, insbesondere bei hoher Stoßbelastung, z.B. durch Beschuß, können jedoch Schwierigkeiten auftreten. So ergeben sich beispielsweise bei Beschuß dieser bekannten Formkörper mit Kugeln von 5,56 mm und einem Gewicht von 0,7 g an der Auftreffstelle spinnwebartige Risse, wodurch die Durchschlagfestigkeit geringer wird und letztlich Splitterung erfolgt.

Der Erfindung liegt die Aufgabe zugrunde, ein Verfahren der vorstehend genannten Art derart auszubilden, daß die erhaltenen Polylaurinlactamformkörper verbesserte, pyhsikalische Eigenschaften, insbesondere höhere Kerbschlagzähigkeiten und Durchschlagfestigkeiten, aufweisen.

Diese Aufgabe wird gemäss der Erfindung durch ein Verfahren zur Herstellung von Formkörpern aus Polylaurinlactam gelöst, bei dem eine Laurinlactamschmelze zunächst mit einem Katalysator vermischt und anschließend das Gemisch mit einem Aktivator versetzt und polymerisiert wird, wobei das polymerisierende Material zu Fäden oder Strängen vergossen und anschließend zu Granulaten zerkleinert wird und das zerkleinerte Material bei Temperaturen von 220 bis 255°C und Drücken von $50 \cdot 10^5$ bis $100 \cdot 10^5$ Pa spritzgußgeformt wird, das dadurch gekennzeichnet ist, daß dem Granulat vor der Formung 0,1 bis 5 Gew.% Siliconfett zugesetzt werden.

Besonders geeignet erwiesen sich Zusatzmengen an Siliconfett von 0,5 bis 1 Gew.%.

Als Siliconfette eignen sich besonders solche, die als Konsistenzgeber Seifen enthalten. Mit Seifen gedicktes Phenylmethylsiliconöl wird als Siliconfettzusatz besonders bevorzugt.

Zweckmässig erfolgt der Siliconfettzusatz derart, daß das Siliconfett zunächst mit pulverförmig zerkleinertem Polylaurinlactam vermischt wird und dieses Gemisch dem Polylaurinlactamgranulat zugesetzt wird.

Ein weiterer Gegenstand der Erfindung besteht in Formkörpern aus Polylaurinlactam, die nach dem vorstehend angegebenen Verfahren hergestellt worden sind.

Besonders bevorzugte Formkörper gemäss der Erfindung sind Schutzhelme und Schutzplatten.

Als Ausgangsmaterial zur Durchführung des erfindungsgemässen Verfahrens wird das nach der DE-OS 2 5o7 549

-3-

oder DE-OS 2 559 749 erhaltene Polylaurinlactam verwendet, das nach dem älteren Vorschlag der deutschen Patentanmeldung P 31 14 217.6 weiterbehandelt wird.

Zur Herstellung des Ausgangsmaterials wird zunächst Laurinlactam aufgeschmolzen und in diese Schmelze der Katalysator eingemischt. Nach gründlichem Vermischen wird dem Gemisch der Aktivator gegebenenfalls gemischt in einer Teilmenge der Laurinlactamschmelze zugesetzt. Die üblichen Katalysatoren und Aktivatoren finden Verwendung, wobei insbesondere Natrium, Alkalilactame, wasserfreies Äthanol und Kohlendioxid, sowie bevorzugt Natriumamid als Katalysatoren und substituierte Lactame, z.B. N-Aryllactame und N-Cyanolactame, substituierte Harnstoffe und Reaktionsprodukte des Carbaminsäurechlorids mit heterocyclischen Verbindungen, wie Imidazol und bevorzugt Isocyanate als Aktivatoren verwendet werden. Die Zugabe des Katalysators zu der Laurinlactamschmelze, die nachfolgende Beimischung des Aktivators und die Polymerisation erfolgen vorzugsweise bei konstanter Temperatur, zweckmässig im Bereich von 150 bis 200 °C, wobei sich eine Temperatur von 160°C als optimal erwies.

Man kann auch gemäss der DE-OS 2 559 749 so vorgehen, daß äquivalente Mengen Laurinlactam in zwei getrennte Kessel eingebracht und unter Rühren geschmolzen werden. Unter Einhaltung einer Temperatur unterhalb 170°C und oberhalb 160°C wird in einen Kessel ein Katalysator eingebracht und gerührt. Gegenüber diesem Vorgang zeitlich versetzt wird in einen getrennten Kessel, der eine äquivalente Menge Lactamschmelze aufweist, unter Rühren ein Aktivator bei einer Temperatur zugesetzt, die einige °C niedriger als diejenige der ersten Schmelze liegt, jedoch ebenfalls innerhalb des Bereichs von unterhalb 170°C bis oberhalb 160°C. Die beiden Behälterinhalte werden dann unter Beibehaltung ihrer Temperatur jeweils

-4-

durch eine Zahnradpumpe aus ihren Kesseln abgezogen und von den beiden Zahnradpumpen über Rohrleitungen mit einer maximalen Neigung zur Waagrechten von 10°C zu einer Mischzone geführt, wobei die Rohrleitungen eine um mindestens ein Drittel größere Volumendimensionierung besitzen, als sie der Förderleistung der Pumpe entsprechen. In der Mischzone wird das Material kurz vermischt, wobei die auftretenden Gase über Zahnradpumpen in den Mischkessel zurückgefördert werden.

Die nach den vorstehend angegebenen Verfahren erhaltenen polymerisierenden Materialien werden unmittelbar zu Fäden oder Strängen vergossen. Für diesen Vorgang kann beispielsweise die in der DE-PS 2 602 312 angegebene Faden-Gießanlage eingesetzt werden. Die Fäden oder Stränge werden dann zu einem Granulat oder zu Schnitzeln zerkleinert. Beispielsweise können die Fäden oder Stränge zunächst durch Walzen zu Bändern verarbeitet werden, die anschließend in Streifen geschnitten und schließlich zu Granulat zerkleinert werden. Für die Zerkleinerung des Polymerisats können übliche Mühlen oder Granuliermaschinen eingesetzt werden.

Die Granulate können beliebige, regelmässige oder unregelmässige Formen aufweisen. Beispielsweise besitzt das verwendete Granulat rechteckigen, insbesondere quadratischen Querschnitt. Vorzugsweise hat das eingesetzte Granulat einen mittleren Teilchendurchmesser von 2 bis 5 mm. Ein würfelförmiges Granulat mit Kantenlängen von 3 mm erwies sich als besonders günstig.

Derartige Polylaurinlactam-Granulate werden dann gemäss der Erfindung unter Zusatz von Siliconfett in einer Menge von 0,1 bis 5 Gew.% spritzgußgeformt. Dabei werden Temperaturen von 220 bis 255°C und Drücke von $50 \cdot 10^5$ bis $100 \cdot 10^5$ Pa angewendet. Der Formvorgang kann in üblichen Spritzgußmaschinen mit beheizten Extruder-

-5-

schnecken und Düsen erfolgen. Vorzugsweise wird der hintere Bereich der Schnecke auf 240°C beheizt, während der vordere Bereich der Schnecke auf 250°C beheizt wird. Die Düsenheizung liegt vorzugsweise bei 250°C.

Als Siliconfette werden vorzugsweise solche eingesetzt, die Seifen als Konsistenzgeber enthalten. Derartige seifengedickten, insbesondere mit Lithiumseifen gedickte, Siliconfette erwiesen sich als Zusatz zu dem Polylaurinlactam vor dessen Formung als besonders geeignet. Vorzugsweise wird als Siliconfett mit Seifen gedicktes Phenylmethylsiliconöl verwendet. Während die Zusatzmenge an Siliconfett allgemein zwischen 0,1 und 5 Gew.% liegt, werden vorzugsweise Mengen von 0,2 bis 3 Gew.% verwendet. Besonders günstige Ergebnisse werden bei einem Siliconfettzusatz von 0,5 bis 1 Gew.% erhalten.

Der Zusatz des Siliconfetts zu dem Polylaurinlactamgranulat kann in beliebiger Weise erfolgen, vorausgesetzt , daß sich eine gute Vermischung mit dem Granulat ergibt. Es erwies sich als besonders vorteilhaft, den Zusatz des Siliconfetts nicht unmittelbar zu dem Granulat vorzunehmen, sondern zunächst das Siliconfett mit pulverförmigem Polylaurinlactam zu vermischen und dieses Gemisch dann dem Polylaurinlactamgranulat zuzusetzen. Das Siliconfett wird also durch Vermischen mit kleineren Mengen pulverisiertem Polylaurinlactam zunächst in eine leichter handhabbare und leichter vermischbare Pulverform überführt, die dann in einfacher Weise mit der Masse des Polylaurinlactamgranulats vermischt werden kann.

Bei diesem Vorvermischen von Polylaurinlactampulver mit Siliconfett zur Überführung des Siliconfetts in eine geeignete Zugabeform zu dem Granulat wird das Laurinlac-

0108943

tampolymerisat zweckmässig in sehr fein pulverisierter Form, insbesondere in Puderform, beispielsweise mit einer Korngröße unterhalb 10 µm, vorzugsweise unterhalb 100 nm, eingesetzt. Nachdem das das Siliconfett durch die Vermischung mit dem Polymerisatpulver in eine geeignete Zugabeform überführt worden ist, kann das pulverförmige Gemisch ohne Schwierigkeit mit dem Polylaurinlactamgranulat vermischt werden. Zweckmässig erfolgt der Mischvorgang durch Auftrommeln des pulverförmigen Materials auf das Granulat.

Das Gemisch aus Polylaurinlactam und Siliconfett wird dann im Spritzguß zu den entsprechenden Formkörpern geformt, wobei die vorstehend angegebenen Bedingungen für den Formvorgang einzuhalten sind.

Die nach dem Verfahren der Erfindung erhaltenen Polylaurinlactamformkörper zeichnen sich durch hervorragende Eigenschaften aus, in denen sie bisher bekannten Polylaurinlactammaterialien überlegen sind.

Unter Beibehaltung der günstigen Eigenschaften des nach dem Verfahren der älteren Anmeldung P 31 14 217.6 erhaltenen Polylaurinlactammaterials wurden aufgrund der vorliegenden Erfindung insbesondere die Kerbschlagzähigkeit und die Durchschlagfestigkeit des Materials verbessert. Durch den Zusatz von Siliconfett zu dem Polylaurinlactamgranulat vor dessen Formgebung wird erreicht, daß bei Schlag- und Stoßbelastung nicht mehr eine Splitterung des Formkörpers erfolgt, sondern sich eine Schieferung,ähnlich wie bei Glimmer, ergibt. Es bilden sich gewissermassen Schichten aus, wobei die untereinander liegenden Schichten die Durchschlagfestigkeit des Formkörpers erhöhen. Ferner zeichnen sich die erfindungsgemässen Formkörper durch äußerst geringe Wärmeleitfähigkeit aus.

-7-

Die Formkörper der Erfindung finden aufgrund ihrer hervorragenden Eigenschaften vielseitige Verwendung.

Eine bevorzugte Ausführungsform der Erfindung besteht in der Ausbildung der Formkörper als Schutzhelme und Schutzplatten.

Sowohl Schutzhelme als auch Schutzplatten müssen hohen mechanischen Beanspruchungen gewachsen sein. Insbesondere werden hohe Anforderungen an die Kerbschlagzähigkeit und Durchschlagfestigkeit derartiger Formkörper gestellt. Die als Schutzhelm bzw. Schutzplatte ausgebildeten Formkörper der Erfindung zeigen vor allem hervorragende Werte bei der ballistischen Prüfung. Die Durchschlagfestigkeit derartiger Formkörper bei Beschuß zeigte überragende Werte, die weit über denen bekannter Helm- bzw. Schutzplattenmaterialien lagen. Aufgrund des Siliconfettzusatzes zum Polylaurinlactammaterial bei der Spritzgußformung der Formkörper tritt bei Beschuß keine Splitterung , sondern eine Schieferung, wie Glimmer, ein, ohne jegliche Festigkeitseinbuße.

Nachfolgend wird die Erfindung anhand von Beispielen erläutert.

### BEISPIEL 1

Nach dem in der DE-OS 2 5o7 549 beschriebenen Verfahren wird aus Laurinlactamschmelze unter Zusatz von Natriumamid als Katalysator und anschließendem Zusatz von Phenylisocyanat als Aktivator ein Polymerisationsprodukt hergestellt, das im polymerisierenden Zustand bei Temperaturen von 160 bis 168°C einer Faden-Gießanlage zugeführt wird, aus der das Polymerisationsprodukt als fadenförmiges Material austritt und dann auf eine Korngröße von 3 bis 4 mm zu Granulaten zerkleinert wird.

Gemäss der Erfindung wird das Polylaurinlactamgranulat mit 0,8 Gew.% eines mit Lithiumseifen gedickten Siliconfetts vermischt. Nach gründlicher Vermischung wird das mit dem Siliconfett versetzte Polylaurinlactamgranulat in eine Spriztgußmaschine gebracht und dort unter Anwendung beheizter Extruderschnecken und beheizter Düse bei einer Temperatur von 240°C im hinteren Bereich der Schnecke und bei 250°C im vorderen Bereich der Schnecke bei einem Druck von $80 \cdot 10^5$ Pa in Form eines Schutzhelms spritzgußgeformt.

Der erhaltene Formkörper zeichnete sich durch hervorragende mechanische und thermische Eigenschaften, insbesondere durch hohe Kerbschlagzähgikeit und Durchschlagfestigkeit, aus.

BEISPIEL 2

Nach dem in der DE-OS 2 559 749 beschriebenen Verfahren wird aus einer mit Natriumamid als Katalysator versetzten Laurinlactamschmelze unter verzögerter Zugabe einer äquivalenten Menge einer mit Phenylisocyanat als Aktivator versetzten Laurinlactamschmelze bei Temperaturen im Bereich von 160 bis 170°C ein Polymerisationsgemisch hergestellt, wobei die in der Mischzone auftretenden Gase über Zahnradpumpen abgeführt werden. Das polymerisierende Material wird unmittelbar zu Fäden vergossen und anschließend auf einen mittleren Teilchendurchmesser von3 bis 4 mm granuliert.

Gemäss der Erfindung wird das zuzusetzende Siliconfett zunächst durch Vermischen mit Polylaurinlactampulver in eine Form überführt, die in dem Polylaurinlactamgranulat leicht verteilbar ist. Hierzu wird eine kleine Menge Polylaurinlactamgranulat zu einem Pulver mit einem mittleren Teilchendurchmesser von unter 10 µm

C108943

zerkleinert. Zu diesem Pulver werden 0,7 Gew.% Siliconfett mit Stearatseife als Konsistenzgeber, bezogen auf die gesamte im Spritzguß zu formende Polylaurinlactammenge, unter Vermischen zugesetzt. Das Siliconfett enthaltende Polylaurinlactampulver wird dann auf das Polylaurinlactamgranulat aufgetrommelt.

Das in der vorstehenden Weise mit Siliconfett versetzte Polylaurinlactamgranulat wird in einer Spritzgußmaschine bei Temperaturen von 230°C im hinteren Bereich der Schnecke und 245°C im vorderen Bereich der Schnecke, sowie der Düse und Drücken von $70 \cdot 10^5$ Pa in Form von Schutzhelmen spritzgußgeformt.

Die Formkörper zeichneten sich durch hervorragende physikalische Eigenschaften , insbesondere hohe Durchschlagfestigkeit und Schlagzähigkeit, aus.

Die nach dem Verfahren von Beispiel 2 in Form von Schutzhelmen hergestellten Formkörper wurden einer ballistischen Prüfung unterzogen. Das Verhalten bei Beschuß mit einer Kugel von 5,56 mm und einem Gewicht von 1,7 g ist in der nachfolgenden Tabelle III zusammen mit Werten für andere bekannte Militärhelmtypen aufgeführt.

BAD ORIGINAL

TABELLE III

| Helmtyp | Gewicht | Maximale kinetische Energie ohne Durchschlag | | Kinetische Energie zwei Durchschläge | | Minimale kinetische Energie mit einem Durchschlag | |
|---|---|---|---|---|---|---|---|
| | | in J | $V_O$ in m/s | in J | $V_O$ in m/s | in J | $V_O$ in m/s |
| American fibre, Aramid | 1,682 | 89 | 504 | 202 | 760 | 84 | 490 |
| S.A. Steel & Nylon | 1,479 | 71 | 450 | 93 | 516 | 76 | 467 |
| Israeli Steel, Haargaz | 1,467 | 79 | 476 | 133 | 617 | 84 | 490 |
| Israeli fibre, Orlite | 1,329 | 79 | 476 | 144 | 641 | 86 | 495 |
| British fibre | 1,256 | 81 | 481 | 113 | 568 | 86 | 495 |
| Indian fibre | 1,072 | 44 | 354 | 68 | 442 | 40 | 337 |
| Ballistic DM 609 A | 0,943 | 36 | 321 | 135 | 621 | 53 | 391 |
| S.A. fibre, white | 0,675 | 36 | 321 | 47 | 368 | 20 | 240 |
| Polycarbonate crash | 0,586 | 39 | 335 | 74 | 460 | 38 | 331 |
| S.A. fibre, blue | 0,499 | 22 | 250 | 28 | 281 | 19 | 235 |
| Polylaurinlactam gem. der Erfindung | 0,884 | 630 | 1341 | -- | -- | -- | -- |
| Zytel ST | 0,960 | -- | -- | 62 | 421 | -- | -- |
| PA 6 (Kond.3,5% $H_2O$) | 0,905 | -- | -- | 52 | 385 | -- | -- |
| PA 66 | 0,904 | -- | -- | 49 | 374 | -- | -- |
| Grilamid TR 55 | 0,905 | -- | -- | 56 | 401 | -- | -- |
| Stahl HV | 1,046 | -- | -- | 103 | 542 | -- | -- |

* Bei den erfindungsgemäßen Polylaurinlactamhelmen erfolgte eine Steigerung $V_O$ von 600 bis 1341 m/s ohne Durchschlag, danach Versuchsabbruch.

0108943

Die Ergebnisse obiger Tabelle zeigen klar, daß die erfindungsgemässen Polylaurinlactamhelme eine gegenüber den bekannten Helmen weit überlegene Durchschlagfestigkeit besitzen. Darüberhinaus wirkt sich noch das sehr günstige geringe Gewicht des erfindungsgemässen Helms aus, das etwa die Hälfte des in seiner Durchschlagfestigkeit bisher am günstigsten Aramidhelms beträgt.

0108943

Patentansprüche
_____

1. Verfahren zur Herstellung von Formkörpern aus Polylaurinlactam, bei dem eine Laurinlactamschmelze zunächst
mit einem Katalysator vermischt und anschließend das Gemisch mit einem Aktivator versetzt und polymerisiert
wird, wobei das polymerisierende Material zu Fäden oder
Strängen vergossen und anschließend zu Granulaten zerkleinert wird und das zerkleinerte Material bei Temperaturen von 220 bis 255°C und Drücken von $50 \cdot 10^5$ bis
$100 \cdot 10^5$ Pa spritzgußgeformt wird, d a d u r c h
g e k e n n z e i c h n e t , daß dem Granulat vor der
Formung 0,1 bis 5 Gew.% Siliconfett zugesetzt werden.

2. Verfahren nach Anspruch 1, d a d u r c h
g e k e n n z e i c h n e t , daß der Siliconfettzusatz
derart erfolgt, daß das Siliconfett zunächst mit zu
Pulver zerkleinertem Polylaurinlactam vermischt wird
und dieses Gemisch dem Polylaurinlactamgranulat zugesetzt wird.

3. Verfahren nach Anspruch 1 oder 2, d a d u r c h
g e k e n n z e i c h n e t, daß das Siliconfett
in einer Menge von 0,5 bis 1 Gew.% zugesetzt wird.

4. Verfahren nach Anspruch 1 bis 3, d a d u r c h
g e k e n n z e i c h n e t, daß ein Siliconfett verwendet wird, das als Konsistenzgeber Seifen enthält.

5. Verfahren nach Anspruch 1 bis 4, d a d u r c h
g e k e n n z e i c h n e t , daß als Siliconfett
mit Seifen gedicktes Phenylmethylsiliconöl verwendet
wird.

6. Formkörper aus Polylaurinlactam, der dadurch hergestellt worden ist, daß eine Laurinlactamschmelze zu-

-13-

nächst mit einem Katalysator vermischt und anschließend das Gemisch mit einem Aktivator versetzt und polymerisiert wird, wobei das polymerisierende Material zu Fäden oder Strängen vergossen und anschließend zu Granulaten zerkleinert wird und das zerkleinerte Material bei Temperaturen von 220 bis 255°C und Drücken von $50 \cdot 10^5$ bis $100 \cdot 10^5$ Pa spritzgußgeformt wird, d a d u r c h   g e k e n n z e i c h n e t , daß bei seiner Herstellung dem Polylaurinlactamgranulat vor der Formung 0,1 bis 5 Gew.% Siliconfett zugesetzt worden sind.

7. Formkörper nach Anspruch 6, d a d u r c h   g e k e n n z e i c h n e t, daß bei seiner Herstellung dem Polylaurinlactamgranulat vor der Formung 0,5 bis 1 Gew.% Siliconfett zugesetzt worden sind.

8. Formkörper nach Anspruch 6 oder 7, d a d u r c h   g e k e n n z e i c h n e t, daß bei seiner Herstellung dem Polylaurinlactamgranulat vor der Formung seifengedicktes Siliconfett zugesetzt worden ist.

9. Formkörper nach Anspruch 6 bis 8 in Form eines Schutzhelmes.

10. Formkörper nach Anspruch 6 bis 8 in Form einer Schutzplatte.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | GB-A-2 096 047 (HARWE AG) | | C 08 L 77/02<br>A 42 B 3/02 |
| | --- | | |
| D,A | FR-A-2 272 127 (BHNF) | | |
| | --- | | |
| D,A | DE-A-2 602 312 (CENRUS AG) | | |
| | --- | | |
| A | FR-A-2 235 158 (SUMITOMO) | | |
| | ----- | | |

| | |
|---|---|
| | RECHERCHIERTE SACHGEBIETE (Int. Cl. ³) |
| | C 08 L 77/00 |

Der vorliegende Recherchenbericht wurde für alle Patentansprüche erstellt.

| Recherchenort<br>DEN HAAG | Abschlußdatum der Recherche<br>08-02-1984 | Prüfer<br>STIENON P.M.E. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82